# EUROPEAN PATENT APPLICATION

(11) **EP 3 974 992 A1**
(43) Date of publication of application: **30.03.2022**
(21) Application number: 20198107.3
(22) Date of filing: 24.09.2020
(51) Int. Cl.: G06F 11/30

(54) **METHOD FOR MONITORING THE STATES OF A COMPUTER SERVICE**

(71) Applicant: Atos Nederland B.V., 1185 MC Amstelveen (NL)
(72) Inventor: VAN DEN BOOGAARD, Willem, Den Haag (NL); LUIJTEN, Barry, 3314 AL Dordrecht (NL); CARLO, Francesco, 45481 Mülheim an der Ruhr (DE); MÜLLER, Hendrik, 47269 Duisburg (DE)
(74) Representative: Cabinet Camus Lebkiri

(57) **Abstract**

A first aspect of the invention concerns a method for monitoring the state of a computer service running on a server, a service being associated with a first status, said intrinsic status, and a second status, said dependency status; each status being in at least one of the "nominal" or "critical" states ; the method comprising: a step of determining the state of the intrinsic status (IS) of the computer service (Sx); a step of updating an indicator of the intrinsic status (IS) according the state of the intrinsic status (IS) determined in the previous step; when the monitored computer service (Sx) depends on other computer services, a step of determining the state of the dependency status (DS) of said computer service (Sx), said dependency status (DS) being in the "critical" state if at least one of the services on which the monitored service (Sx) depends upon has an intrinsic (IS) or a dependencies status (DS) in the "critical" state; when the monitored computer service (Sx) does not depend on other computer services, a step of setting the states of the dependency status (DS) to a predetermined state; a step of updating an indicator of the dependency status according the state of the dependency status determined in the previous step.

## Description

### FIELD OF THE INVENTION

The field of the invention is the monitoring of computer services. The present invention concerns a monitoring method using two statuses: a first status related to the intrinsic status of the monitored service and a second status related to the status of the services on which the monitored service depends, said dependency status.

### PRIOR ART

The functional dependencies of IT and IT supported business are modelled in service models. These models describe the functional dependencies, especially if the status of one service is dependent on other service in the model. These models consist of services that describe physical IT components like servers, virtual machines, running software as well as virtual elements like application services, business services, business processes etc. Service models so far calculate the status of individual services based on the monitoring status known about this service and the calculation results of the service dependency tree. The result is one final status for the service describing the combined result of this calculation.

However, the use of such one final status regularly leads to false positive status of services in most cases. The false positives lead to wrong assessment of the situation and unnecessary invocation of escalation procedures as well as to exaggeratedly negative impact statements towards the users of the service. As result the service models and attached presentations (especially real time dashboards) will not be used anymore by lack of trust and an inefficient informal shadow support structure be established.

Therefore, there is a need for a method for monitoring computer services that prevents the occurrence of false positive while reporting not only the state of the monitored service but also the status of the services on which the monitored service depends.

### SUMMARY OF THE INVENTION

The invention provides a solution to the above-described needs by proposing a method in which a first status represents the intrinsic status of the service and a second status represents the status of the services on which the monitored service depends.

A first aspect of the invention concerns a method for monitoring the state of a computer service running on a server, a service being associated with a first status, said intrinsic status, and a second status, said dependency status; each status being in at least one of the "nominal" or "critical" state; the method comprising:
- a step of determining the state of the intrinsic status of the computer service;
- a step of updating an indicator of the intrinsic status according the state of the intrinsic status determined in the previous step;
- when the monitored computer service depends on other computer services, a step of determining the state of the dependency status of said computer service, said dependencies being in the critical state if at least one of the services on which the monitored service depends upon has an intrinsic or a dependency status in the "critical" state;
- when the monitored computer service does not depend on other computer services, a step of setting the states of the dependency status to a predetermined state;
- a step of updating an indicator of the dependency status according the state of the dependency status determined in the previous step.

It is meant by "each status being in at least one of the "nominal" or "critical" state", that the status is in one state only but that the number of possible states is at least equal to two, the "nominal" state and the "critical" state, and that other states can also be added to this list. Thanks to the invention, each monitored service is associated with to statuses, a first status related to the intrinsic status of said service and a second status related to the status of the service upon which the monitored service depends. The use of two statuses limits the number of false positive by making a distinction between the service itself and its dependencies. Furthermore, the use of only two indicators with a small number of possible states render the propagation of the status along the dependency tree easy to configure and, therefore, the provided indications easy to understand.

The method according to the first aspect of the invention can also comprise one or more of the following technical characteristics.

In an embodiment, during the step of determining the state of the intrinsic status of the computer service and the step of determining the state of the dependency status, a score of the status is calculated, said score being between a minimal and a maximal value, and the state being determined according to said score.

In an embodiment, the "nominal" state and the "critical" state are the only possible states.

In an embodiment, the method comprises, when at least one indicator is updated to a "critical" state, a step of sending an electronic message to at least one user.

In an embodiment, the predetermined state used in the step of setting the states of the dependency status to a predetermined state is the "nominal" state.

In an embodiment, the method further comprises a step of displaying the monitored service and the services in its dependency tree, each service being represented by a geometrical form, two indicators being associated with each service, one for the intrinsic status and one for the dependency status, and updated when the corresponding statuses are updated, each dependency being represented by geometrical form, for instance an arrow starting from the parent service and pointing to the child service.

A second aspect of the invention concerns a data processing device comprising means configured to perform the steps of the method according to a first aspect of the invention.

A third aspect of the invention concerns a computer program comprising instructions which, when the program is executed by a computer, cause the computer to carry out the method according to the first aspect of the invention.

A fourth aspect of the invention concerns a computer-readable data carrier having stored thereon the computer program according to a third aspect of the invention.

### LIST OF FIGURES

The figure 1 shows a logogram of the method according to the invention.
The figure 2 shows an example of a dependency tree according to the invention.
The figure 3 shows an example of a representation of the different states of the intrinsic and dependency statuses.
The figure 4 shows a first example of monitoring using a method according to the invention.
The figure 5 shows a second exemple of monitoring using a method according to the invention.

### DETAILED DESCRIPTION OF THE INVENTION

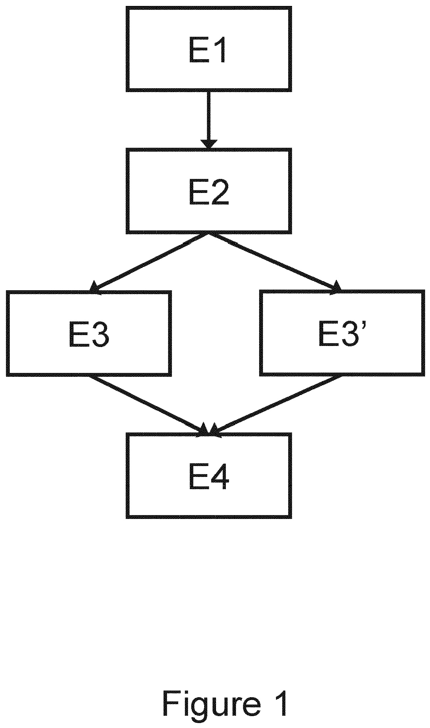

A first aspect of the invention illustrated in figure 1 concerns a method for monitoring the states of a computer service running on a server. The service can for example be a printing service, a printing manager service (for instance managing one or several printing services), or a virtual machine service. A service can depend upon one or more services or be a dependency of one of more services. For example, the printing manager service depends on the virtual machine service on which it runs. In this case, the virtual machine service is a child service of the printing manager service and the printing manager service is a parent service of the virtual machine service. The relation between dependent services is called a service dependency tree, or dependency tree for short.

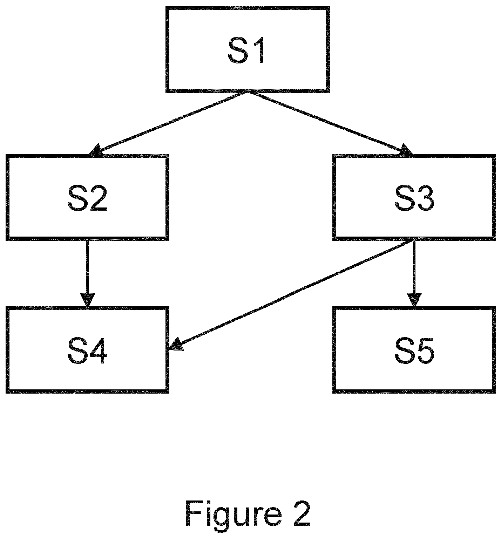

An illustration of such a tree is given in figure 2 in which services are represented by rectangles and dependency relations are represented by arrows. On this dependency tree, the first service S1 depends on the second S2, third S3, fourth S4 and fifth S5 services, the second service S2 depends on the fourth service S4, the third service S3 depends on the fourth S4 and the fifth S5 services, and the fourth S4 and fifth S5 services have no dependency.

In an embodiment, a service Sx is associated with a first status, the intrinsic status IS that can be associated with a first indicator and a second status, the dependency DS status, that can be associated with a second indicator. The intrinsic status IS gives the status of the service Sx itself while the dependency status DS gives an aggregated status of the dependency services of the dependency tree.

In an embodiment, each status IS, DS is in one of the "nominal" state, the "critical" state and, optionally the "warning" state. Of course, more states could be used, but a small number of states (for instance three, preferably two states) allows to propagate easily the states through the dependency tree in order to determine the state of dependency status for each service Sx. In embodiment, the status is a weighed status, for instance a score having a value between 0 and 1. In this case, the state of the status depends on the score, for instance the status is in the "nominal" state when the score is lower than 0.1, in the "warning" state when the score is between 0.1 and 0.8 and in the "critical" state when the score is above 0.8. Of course, these thresholds are only here to illustrate the invention and other thresholds can be used.

In order to illustrate how to propagate the states in the dependency tree to determine the state of the dependency status of a given service Sx, the example of the figure 2 is used assuming that the two possible states of a status are the "nominal" state and the "critical" state. In this example, the fourth S4 and fifth S5 services have no dependency and therefore their dependency status DS is always in the "nominal" state (but another convention could be used). Their intrinsic status IS can be in the "nominal" state or in the "critical" state. The second service S2 depends on the fourth service S4. The dependency status DS of the second service S2 will be in the "nominal" state if the intrinsic IS and the dependency DS statuses of the fourth service S4 are both in the "nominal" state. If at least one of those two statuses IS, DS is in the "critical" state, then the dependency status DS of the second service S2 will be in the "critical" state as well. The third service S3 depends on the fourth S4 and the fifth S5 services. The dependency status DS of the third service will be in the "nominal" state if the intrinsic IS and the dependency DS statuses of both the fourth S4 and the fifth S5 services are in the "nominal" state. If at least one of the two services S4, S5 has at least one of its two statuses IS, DS in the "critical" state, then the dependency status DS of the third service S3 will be in the "critical" state as well. In other words, the "critical" state propagates through the dependency tree from child services to parent services.

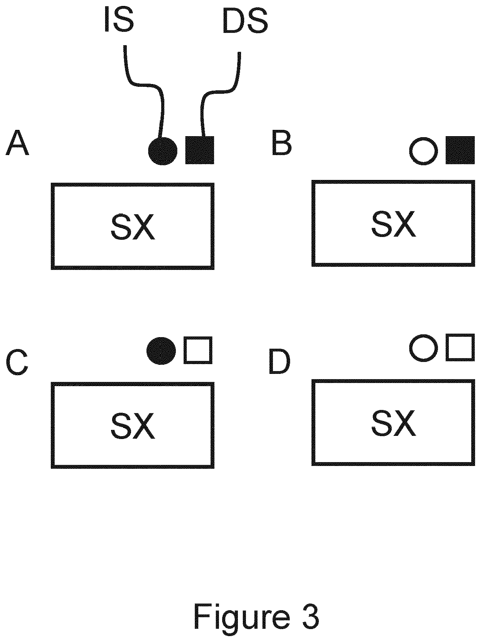

The figure 3 illustrates how the states of the intrinsic IS and dependency DS statuses can be represented. In the example of figure 3, the intrinsic status IS is represented by circle which is empty when the state of the status is "nominal" and black when the state of the status is "critical". The dependency status DS is represented by square which is empty when the state of the status is "nominal" and black when the states of the status is "critical". In the figure 3A, both the intrinsic IS and the dependency DS status are in the "critical" state. In the figure 3B, the intrinsic status IS is in the "nominal" state while the dependency status DS is in the "critical" state. In the figure 3C, the intrinsic status IS is in the "critical" state while the dependency status DS is in the "nominal" state. In the figure 3D, both the intrinsic IS and the dependency status DS are in the "nominal" state. Of course, other representations are possible, for instance color could be use with green for the "nominal" state and red for the "critical" state, two different shapes being used for the intrinsic IS and the dependency DS statuses.

The method according to the invention comprises a step E1 of determining the state of the intrinsic status IS of the computer service Sx. This is usually done by monitoring logs, returned value of commands or response to a local or network requests such as an http requests for instance. The way to obtain the intrinsic status IS of a service Sx is known from the person skilled in the art and will not be detailed further. In an example, the service Sx is a virtual machine service that as a function of creating backups in order to be able to restore the service Sx if necessary. If such a backup is not possible, for instance because the storage capacity is not sufficient, the intrinsic status IS of the virtual machine service Sx will be considered in the "critical" state. In another example, a score is determined during the step E1 of determining the state of the intrinsic status IS of the computer service Sx, the score having a value between a minimal score (zero for instance) and a maximal score (one for instance). In this case, a state (e.g. "nominal", "warning", "critical") is determined as function of the score.

Once the state of the status is known, it is necessary to update the corresponding indicator in order to communicate the new state to the user. Therefore, the method further comprises a step E2 of updating the indicator of the intrinsic status IS according the state of the intrinsic status IS determined in the previous step. This indicator can take various form, each allowing to identify the different possible values of the intrinsic status IS. An example of such an indicator has already be given in figure 3.

The method further comprises a step E3 of determining the state of the dependencies status DS of the computer service, said dependency status DS being in the "critical" state if at least one of the services on which the considered service depends (directly or indirectly) has an intrinsic IS or a dependencies status DS in the "critical" state. It implies that the services in the dependency tree have updated their own intrinsic IS and dependency status DS. In other word, the present method 100 can be used recursively on each service in the dependency tree. Statuses IS, DS are then propagated along the tree to determine the state of the dependency status DS.

The method further comprises a step E4 of updating the indicator of the dependency status DS according the state of the dependency status IS determined in the previous step E3. This indicator can take various form, each allowing to identify the state of dependency status DS and to differentiate it from the intrinsic status IS.

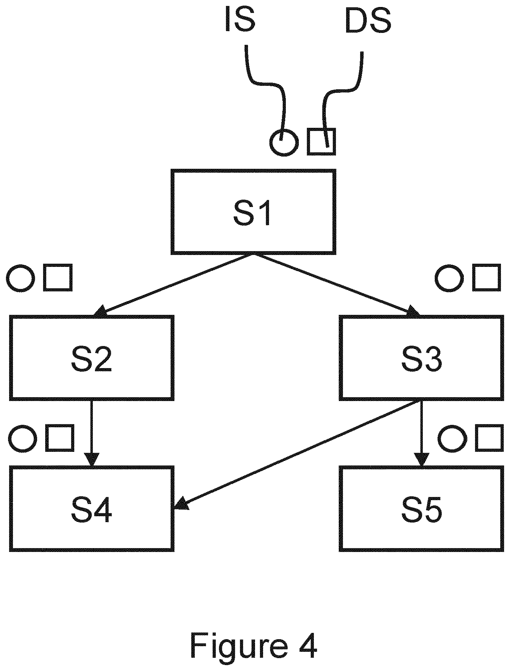

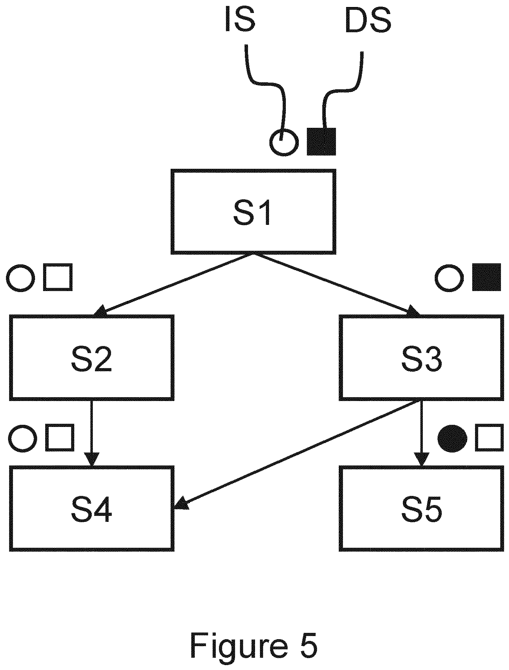

The monitored service and its dependency can be presented to the user by displaying each service by a geometrical form (for instance a rectangle with the name of the service), two indicators being associated with each service, one for the intrinsic status and one for the dependency status, and updated when the corresponding statuses change, each dependency being represented by an arrow starting from the parent service and pointing to the child service. Such a representation obtained using the method according to the invention is illustrated in figure 4 and 5.

In figure 4, the intrinsic IS and dependency DS status of all services Sx are in the "nominal" state and the indicators are updated accordingly. Thank to the two statuses IS, DS represented by their respective indicators, it is possible to see, just by looking at the overall state of the first service S1, that all the services have both of their statuses IS, DS in the "nominal" state. This greatly reduces the burden of the user when monitoring several services that depends on each other's.

In figure 5, the dependency status DS of the fifth service S5 is in the "nominal" state while its intrinsic status IS is in the "critical" state and the status indicators are updated accordingly. For instance, the fifth service S5 is virtual machine service and the backup function of this service is not working properly leading to the "critical" state of the intrinsic status IS. Both the intrinsic IS and the dependency DS status of the fourth service S4 are in the "nominal" state. The intrinsic status IS of the second service S2 is in the "nominal" state. Furthermore, the second service S2 only depends on the fourth service S4 that has both statuses IS, DS in the "nominal" state. Therefore, the dependency status DS of the second service S2 is in the "nominal" state. The intrinsic status IS of the third service S3 is in the "nominal" state. Furthermore, the third service S3 depends on both the fourth S4 and the fifth S5 services, and the fifth service S5 has an intrinsic status IS in the "critical" state, said state propagating to the dependency status DS of the third service S3. The dependency status DS of the third service S3 is therefore in the "critical" state. The intrinsic status IS of the first service S1 is in the "nominal" state. Furthermore, the first service S1 depends on both the second S2 and the third service S2, and the third service S3 has a dependency status DS in the "critical" state, said state propagating to the dependency status DS of the first service S1. The dependency status DS of the first service S1 is therefore in the "critical" state.

In other words, the "critical" status, whether for the dependency DS or the intrinsic IS status, propagates to services in higher position (parent services) in the dependency tree. Similarly, when the statuses IS, DS take the form of score, the state associated with the higher score takes precedence over the other states when propagating in the dependency tree.

An advantage of the present invention is that the propagation rules are easy to implement but guarantee that no information is lost. It also reduces the false positive in which a service is deemed to be unavailable while in fact it is still running. For instance, coming back to the figure 5, the fifth service S5 could be a virtual machine service and the critical state of the intrinsic status IS could come from a failure in the backup procedure of the virtual machine delivering the virtual machine service S5. While such a failure is worth to be reported, it should not trigger a report such that the services S3, S1 depending on the virtual machine service S5 appear to be unavailable. In the present invention, the services depending upon the fifth service S5, like third S3 and the first S1 services, only report a dependency status DS in the "critical" state while the intrinsic status IS remains in the "nominal" state.

## Claims

1. Method (100) for monitoring the state of a computer service running on a server, a service being associated with a first status, said intrinsic status, and a second status, said dependency status; each status being in at least one of the "nominal" or "critical" states ; the method comprising:
- a step (E1) of determining the state of the intrinsic status (IS) of the computer service (Sx);
- a step (E2) of updating an indicator of the intrinsic status (IS) according the state of the intrinsic status (IS) determined in the previous step (E1);
- when the monitored computer service (Sx) depends on other computer services, a step (E3) of determining the state of the dependency status (DS) of said computer service (Sx), said dependency status (DS) being in the "critical" state if at least one of the services on which the monitored service (Sx) depends has an intrinsic (IS) or a dependencies status (DS) in the "critical" state;
- when the monitored computer service (Sx) does not depend on other computer services, a step (E3') of setting the states of the dependency status (DS) to a predetermined state;
- a step (E4) of updating an indicator of the dependency status according to the state of the dependency status determined in the previous step (E3,E3').

2. Method according to the preceding claim in which, during the step(E1) of determining the state of the intrinsic status of the computer service and the step (E3) of determining the state of the dependency status, a score of the status is calculated, said score being between a minimal and a maximal value, and the state is determined according to said score.

3. Method according to one of the preceding claims in which the "nominal" state and the "critical" state are the only possible states.

4. Method according to one of the preceding claims comprising, when at least one indicator is updated to a "critical" state, a step of sending an electronic message to at least one user.

5. Method according to one of the preceding claims in which the predetermined state used in the step (E3') of setting the states of the dependency status (DS) to a predetermined state is the "nominal" state.

6. Method according to one of the preceding claims further comprising a step of displaying the monitored service and the services in its dependency tree, each service being represented by a geometrical form, two indicators being associated with each service, one for the intrinsic status and one for the dependency status, and updated when the corresponding statuses are updated, each dependency being represented by geometrical form.

7. A data processing device comprising means configured to carry out the method according to one of the preceding claims.

8. A computer program comprising instructions which, when the program is executed by a computer, cause the computer to carry out the method according to one of the claims 1 to 6.

9. A computer-readable data carrier having stored thereon the computer program according to claim 8.
